# EUROPÄISCHE PATENTSCHRIFT

(11) **EP 2 117 906 B1**
(45) Veröffentlichungstag und Bekanntmachung des Hinweises auf die Patenterteilung: **12.06.2013**
(21) Anmeldenummer: 07856773.2
(22) Anmeldetag: 15.12.2007
(51) Int. Cl.: B62D 5/04

(54) **ELEKTROMECHANISCHE LENKUNG**
ELECTROMECHANICAL STEERING MECHANISM
DIRECTION ÉLECTROMÉCANIQUE

(30) Priorität: 10.01.2007 DE 102007001531
(43) Veröffentlichungstag der Anmeldung: 18.11.2009
(73) Patentinhaber: Volkswagen Aktiengesellschaft, 38440 Wolfsburg (DE)
(72) Erfinder: SCHUMANN, Heiko, 38116 Braunschweig (DE); THIES, Joachim, 38304 Wolfenbüttel (DE)
(86) Internationale Anmeldenummer: PCT/EP2007/011036
(87) Internationale Veröffentlichungsnummer: WO 2008/083819

(56) Entgegenhaltungen:
- EP-A- 0 963 900
- EP-A- 1 225 117
- EP-A- 1 508 707
- WO-A-2005/096472

## Beschreibung

Die Erfindung bezieht sich auf eine elektromechanische Lenkung, umfassend ein Lenkgetriebegehäuse, eine sich durch dieses erstreckende Lenkstange und eine Kugelgewindemutter, die mit der Lenkstange in Eingriff steht, um ein Antriebsmoment eines Elektromotors in eine Axialkraft an der Lenkstange zu übersetzen.

Bei einer solchen Lenkung wird das Antriebsmoment des Elektromotors über einen Kugelgewindetrieb an der Lenkstange zur Wirkung gebracht, welche über Spurstangen mit den Fahrzeugrädern gekoppelt ist, um den Fahrer eines Kraftfahrzeugs beim Lenken zu unterstützen, aktive Lenkungseingriffe vorzunehmen oder im Fall einer fehlenden mechanischen Kopplung zwischen einem Lenkrad und der Lenkstange vom Fahrer vorgegebene Lenkbefehle in entsprechende Axialbewegungen der Lenkstange umzusetzen. Lenkungen dieser Bauart werden beispielsweise in der EP 1 254 826 A2, EP 1 266 817 A2, EP 1 270 370 A2, DE 102 23 863 A1, DE 103 10 492 A1, DE 103 36 856 A1, DE 103 53 161 A1, EP 1 591 345 A1 und EP 1 621 444 A1 beschrieben.

In allen vorstehend genannten Lenkungen, ist die Kugelgewindemutter über eines oder mehrerer Wälzlager im Lenkgetriebegehäuse drehbar gelagert. Das Lenkgetriebegehäuse ist in der Regel geteilt ausgebildet, um die Montage der Getriebestufe und des Kugelgewindetriebs zu ermöglichen. Nach dem Einbau der jeweiligen Komponenten werden die Gehäuseteile durch Schrauben miteinander verbunden.

Zudem sind an den axialen Enden des Lenkgetriebegehäuses um die Lenkstange Anschlagflächen für die Spurstangen vorgesehen, um den Lenkhub der Lenkstange zu begrenzen. Im Bereich der Anschlagflächen befindet sich in der Regel jeweils auch eine Aufnahme und Dichtstelle für einen Faltenbalg, welcher das Spurstangengelenk sowie die aus dem Lenkgetriebegehäuse austretenden Abschnitte der Lenkstange gegen Verschmutzung schützt.

Aus der gattungsbildenden EP 1 225 117 A1 ist eine elektromechanische Lenkung nach dem Oberbegriff des Anspruchs 1 mit einem Kugelgewindetrieb bekannt, die einen Gehäusedeckel aufweist, durch den sich die Zahnstange hindurcherstreckt und der an dem Lenkgetriebegehäuse festgelegt ist. Die Kugelmutter ist an ihrem einen Ende an dem Gehäusedeckel und an ihrem anderen Ende an dem Lenkungsgehäuse mittels Wälzkörpern drehbar gelagert.

Die EP 1 508 707 A1 zeigt eine elektromechanische Lenkung mit einem Kugelgewindetrieb, bei der zur Dämpfung von Vibrationen ein keramisches Material in einen hohlen Abschnitt der Zahnstange eingebracht wird. Sie zeigt sudem einen Roboterurm, bei den die äußeren Lagerringe der die beiden Kugelmuttern jeweils im Gehäuse abstützenden Wälzlager an dem Gehäuse durch Verschraubung festgelegt sind. Die beiden Kugelmuttern erstrecken sich dabei in axialer Richtung durch die äußeren Lagerringe hindurch.

Ein Kugelgewindetrieb beispielsweise für die Lenkung eines Kraftfahrzeugs ist auch aus der WO 2005/096472 A1 bekannt. Die Kugelmutter ist an ihren beiden Enden mittels Wälzlagern in Abschlussstücken eines Gehäuses drehbar gelagert.

Die vorstehend genannten Lenkungen sind im Hinblick auf den Fertigungs- und Montageaufwand, aber auch auf den benötigten Bauraum verbesserungsbedürftig.

Der Erfindung liegt daher die Aufgabe zugrunde, eine elektromechanische Lenkung der eingangs genannten Art zu schaffen, die sich mit geringerem Aufwand fertigen und montieren lässt und eine kompakte Bauweise aufweist.

Diese Aufgabe wird durch eine elektromechanische Lenkung gemäß Patentanspruch 1 gelöst. Die erfindungsgemäße Lenkung umfasst ein Lenkgetriebegehäuse, eine sich durch dieses erstreckende Lenkstange und eine Kugelgewindemutter, die mit der Lenkstange in Eingriff steht, um ein Antriebsmoment eines Elektromotors in eine Axialkraft an der Lenkstange zu übersetzen. Sie umfasst ferner einen Gehäusedeckel, durch den sich die Lenkstange hindurcherstreckt und der an dem Lenkgetriebegehäuse mittels eines Gewindeabschnitts unmittelbar Verbehranbt ist, und zeichnet sich insbesondere dadurch aus, dass die Kugelgewindemutter an dem Gehäusedeckel mittels Wälzkörpern drehbar gelagert ist und der Gehäusedeckel eine Laufbahn für die Wälzkörper ausbildet. Ferner weist der Gehäusedeckel im Kontaktbereich mit dem Lenkgetriebegehäuse eine Ringnut auf, in der ein Dichtungselement, beispielsweise ein O-Ring, angeordnet ist. Die Axiallänge des Gehäusedeckels ist kleiner als dessen maximaler Auβendurchmesser. Zudem ist zwischen dem Gehäusedeckel und dem Lenkgetriebsgehäuse eine Zentrierung vorgesehen.

Durch die Integration der Laufbahn der Wälzkörper in den Gehäusedeckel kann ein separates Wälzlager und der damit verbundene Montageaufwand eingespart werden. Da überdies die ansonsten erforderliche Axialbefestigung für das Wälzlager entfällt, kann eine kompaktere Bauweise verwirklicht werden. Die hiermit verbundene Verringerung der Bauteilvielfalt führt unmittelbar zu einer Kostenreduzierung.

Durch die Integration der Ringnut für das Dichtungselement im Gehäusedeckel wird ein zusätzlicher Bearbeitungsaufwand auf Seiten des Lenkgetriebegehäuses vermieden.

Die geringere Bauteilevielfalt ermöglicht weiterhin eine Verringerung des Gewichts des Gesamtsystems mit dem Vorteil der Energieeinsparung beim Betrieb eines entsprechend ausgestatteten Fahrzeugs.

Weiterhin kann durch die Anordnung des Wälzlagers unmittelbar im Gehäusedeckel das Wälzlager sehr weit nach außen, das heißt zu den Fahrzeugrädern hin angeordnet werden, wodurch sich für die Belastung des Wälzlagers sowie des Kugelgewindetriebs günstige Hebelverhältnisse ergeben. Dies ermöglicht wiederum eine längere Lebensdauer der einzelnen Komponenten bzw. erlaubt eine schwächere Dimensionierung, wodurch sich weiter Gewicht einsparen lässt.

Weitere, vorteilhafte Ausgestaltungen der Erfindung sind in den Patentansprüchen angegeben.

Für die Innenlaufbahn der Wälzkörper kann ein separater Laufring vorgesehen werden, der an der Kugelgewindemutter befestigt ist. Vorzugsweise wird jedoch auch die Innenlaufbahn für die Wälzkörper integral am Außenumfang der Kugelgewindemutter ausgebildet. Hierdurch lassen sich die Bauteilvielfalt und der Montageaufwand weiter verringern.

Gemäß einer weiteren, vorteilhaften Ausgestaltung der Erfindung sind die Wälzkörper, die zwischen der Laufbahn des Gehäusedeckels und der Laufbahn am Außenumfang der Kugelgewindemutter angeordnet sind, Kugeln. Diese können gegebenenfalls in einem Käfig gehalten sein.

Bevorzugt ist der Gehäusedeckel aus Wälzlagerstahl hergestellt und zumindest im Bereich seiner Laufbahn für die Wälzkörper gehärtet. Er lässt sich vorteilhaft als Drehteil herstellen.

Der Gehäusedeckel verschließt eine Stirnöffnung des Lenkgetriebegehäuses, welches die Innenkomponenten der Lenkung umgibt. Dementsprechend weist der Gehäusedeckel eine lediglich kurze Axiallänge entlang der Lenkstange auf. Gemäß einer vorteilhaften Ausgestaltung erstreckt sich das Lenkgetriebegehäuse axial über die Kugelgewindemutter, wohingegen der Gehäusedeckel die Kugelgewindemutter lediglich teilweise, jedoch nicht vollständig axial überlappt. Dies ist für die Herstellung des Gehäusedeckels als Drehteil besonders vorteilhaft.

Gemäß einer weiteren, vorteilhaften Ausgestaltung der Erfindung weist die Kugelgewindemutter an ihrem Innenumfang einen mit Kugellaufrillen versehenen Abschnitt auf. Durch die Anordnung der Laufbahn am Außenumfang axial außerhalb des Kugellaufrillenabschnitts sind das Wälzlager und die Kugellaufrillen des Kugelgewindetriebs voneinander entkoppelt, so dass im Betrieb auftretende Verformungen nicht die jeweils andere Komponente beeinträchtigen. Hierdurch wird die Lebensdauer des Kugelgewindetriebs und des Wälzlagers verbessert.

Weiterhin kann die Kugelgewindemutter über ein einziges Wälzlager, das heißt das Wälzlager im Gehäusedeckel, drehgelagert sein.

Gemäß einer weiteren, vorteilhaften Ausgestaltung der Erfindung sind in den Gehäusedeckel zusätzliche Funktionen integriert. Hierdurch kann der Bearbeitungsaufwand auf Seiten des Lenkgetriebegehäuses, das vorzugsweise als Gussteil ausgeführt ist, gering gehalten werden.

Beispielsweise kann der Gehäusedeckel gehäuseaußenseitig eine Anschlagfläche für eine Spurstange aufweisen, um den Lenkhub der Lenkstange gegenüber dem Lenkgetriebegehäuse zu begrenzen.

Weiterhin kann der Gehäusedeckel gehäuseaußenseitig einen Ringabsatz aufweisen, an dem ein Faltenbalg befestigt und abgedichtet ist.

Es ist auch möglich, das Verbindungsgewinde zwischen dem Gehäusedeckel und dem Lenkgetriebegehäuse durch eine Gewindedichtung abzudichten.

Nachfolgend wird die Erfindung anhand von in der Zeichnung dargestellten Ausführungsbeispielen näher erläutert. Die Zeichnung zeigt in:
- Figur 1: eine schematische Ansicht eines ersten Ausführungsbeispiels einer elektromechanischen Lenkung nach der Erfindung, n
- Figur 2: eine Detailansicht des Bereichs um einen Gehäusedeckel der Lenkung nach dem ersten Ausführungsbeispiel im Schnitt,
- Figur 3: eine Schnittansicht eines zweiten Ausführungsbeispiels einer elektromechanischen Lenkung nach der Erfindung, und in
- Figur 4: eine Schnittansicht eines dritten Ausführungsbeispiels einer elektromechanischen Lenkung nach der Erfindung.

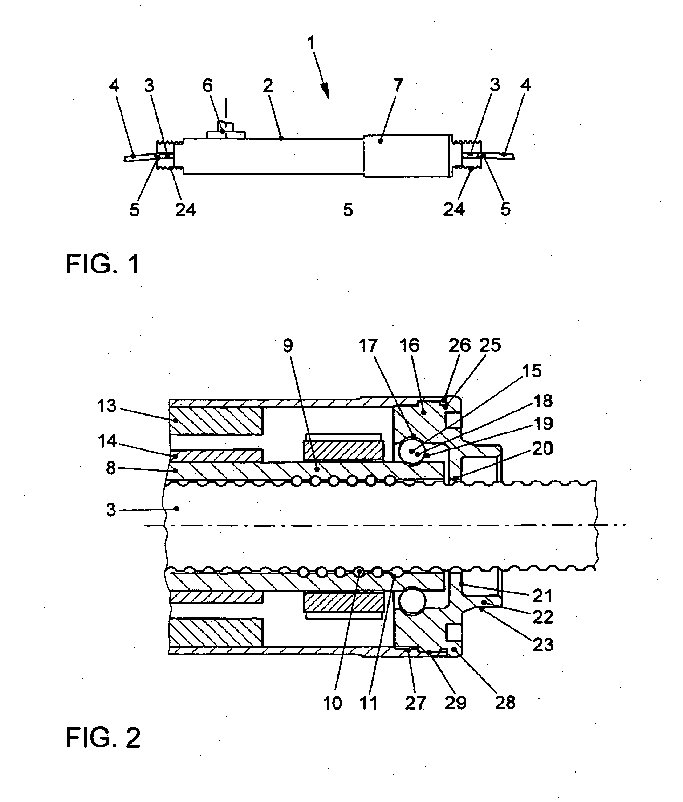

Das erste Ausführungsbeispiel nach den Figuren 1 und 2 zeigt eine elektromechanische Fahrzeuglenkung 1, die hier beispielhaft als Zahnstangenlenkung mit Hilfsantrieb für ein Personkraftfahrzeug ausgebildet ist.

Die Fahrzeuglenkung 1 umfasst ein Lenkgetriebegehäuse 2, durch das sich eine Lenkstange 3 erstreckt. An den Enden der Lenkstange 3 ist jeweils eine zu einem lenkbaren Fahrzeugrad führende Spurstange 4 über ein Spurstangengelenk 5 angeschlossen.

In das Lenkgetriebegehäuse 2 leitet eine Lenksäule 6, die mit einem Lenkrad verbunden ist. Im Lenkgetriebegehäuse 2 ist ein Ritzel vorgesehen, das mit einer Verzahnung der Lenkstange 3 kämmt, um einen fahrerseitig an dem Lenkrad eingebrachten Lenkbefehl in eine Axialbewegung der Lenkstange 3 umzusetzen.

Die Fahrzeuglenkung umfasst weiterhin einen Elektromotor 7, der in dem Lenkgetriebegehäuse 2 angeordnet oder von außen an dieses angesetzt ist. Über den Elektromotor 7 kann an der Lenkstange 3 eine Hilfskraft bereitgestellt werden, um den Fahrer beim Lenken zu unterstützen. Bei einem Ausfall der elektrischen Lenkkraftunterstützung kann das Fahrzeug weiterhin manuell gelenkt werden.

In einer Abwandlung des Ausführungsbeispiels ist es jedoch auch möglich, einen fahrerseitigen Lenkbefehl bzw. die Stellung des Lenkrads allein sensorisch zu erfassen und die erfassten Stellungsinformationen, gegebenenfalls unter Zwischenschaltung einer Regeleinrichtung, zur Ansteuerung des Elektromotors 7 zu verwenden.

Zur Umsetzung des Antriebsmoments des Elektromotors 7 in eine Axialkraft an der Lenkstange 3 dient ein Kugelgewindetrieb, der eine Kugelgewindemutter 8 aufweist. Diese ist an ihrem Innenumfang mit einem Kugelgewindeabschnitt 9 versehen, welcher über Kugeln 10 mit einem Kugelgewindeabschnitt 11 der Lenkstange 3 kämmt. Bei einer Rotation der Kugelgewindemutter 8 wird folglich die Lenkstange 8 axial verschoben. Anstelle einer Kugelgewindemutter 8 kann alternativ eine Rollengewindemutter vorgesehen sein.

Bei dem dargestellten Ausführungsbeispiel ist der Elektromotor 7 koaxial zu der Lenkstange 3 angeordnet. Er umfasst einen im Lenkgetriebegehäuse 2 festgelegten Stator 13 sowie einen als Hohlwelle ausgeführten Rotor 14, der entweder unmittelbar oder unter Zwischenschaltung einer Hülse oder Getriebestufe mit der Kugelgewindemutter 8 gekoppelt ist, um das Antriebsmoment des Elektromotors 7 an die Kugelgewindemutter 8 zu übertragen.

Im Fall einer elektromechanischen Lenkung, bei der der Elektromotor 7 axial versetzt zu der Lenkstange 3 angeordnet ist, wird dessen Antriebsmoment über eine Getriebestufe, beispielsweise einen Riementrieb, an die Kugelgewindemutter 8 übertragen, wie dies zum Beispiel in der DE 103 36 867 A1 dargestellt ist.

Die Kugelgewindemutter 8 ist über ein einziges Wälzlager 15 in einem Gehäusedeckel 16 drehbar gelagert, der das Lenkgetriebegehäuse 2 axial verschließt. Dabei bildet der Gehäusedeckel 16 eine Laufbahn 17 für die Wälzkörper 18 des Wälzlagers 15 aus. In gleicher Weise ist am Außenumfang der Kugelgewindemutter 8 eine Laufbahn 19 für die Wälzkörper 18 integral ausgebildet.

Das Wälzlager 15 ist hier als einreihiges Kugellager dargestellt, wobei die Laufbahnen entsprechend umlaufende Kugellaufrillen sind. Anstelle des dargestellten Wälzlagers können auch andere Lagertypen zum Einsatz kommen, wobei die radial außenliegende Laufbahn bzw. Laufbahnen stets in den Gehäusedeckel 16 integriert sind.

Weiterhin ist die Laufbahn 19 am Außenumfang der Kugelgewindemutter 8 axial außerhalb des Kugelgewindeabschnitts 9 am Innenumfang der Kugelgewindemutter angeordnet, so dass sich diese Bereiche bei etwaigen Verformungen im Betrieb gegenseitig nicht beeinflussen.

Der Gehäusedeckel 16 ist bevorzugt aus Wälzlagerstahl, beispielsweise Cf53, hergestellt. Zudem ist der Gehäusedeckel 16 zumindest im Bereich seiner Laufbahn 17 für die Wälzkörper 18 gehärtet. Der Einsatz eines Stahlwerkstoffes bietet im Vergleich zu den bisher bevorzugt eingesetzten Aluminiumwerkstoffen die Möglichkeit geringerer Wandstärken und damit einen axial größeren Bauraum.

Im Hinblick auf die Integration der Lagerfunktion ist der Gehäusedeckel 16 als einfaches Drehteil mit im wesentlichen rotationssymmetrischer Bauform ausgelegt, wodurch sich dieser kostengünstig herstellen lässt. Die Axiallänge des Gehäusedeckels 16 ist möglichst kurz gewählt und hier kleiner als dessen maximaler Außendurchmesser.

Während sich das Lenkgetriebegehäuse 2 axial über die Kugelgewindemutter 8 erstreckt, wird diese durch den Gehäusedeckel 16 lediglich teilweise, nämlich im Bereich des Wälzlagers 15 axial überlappt.

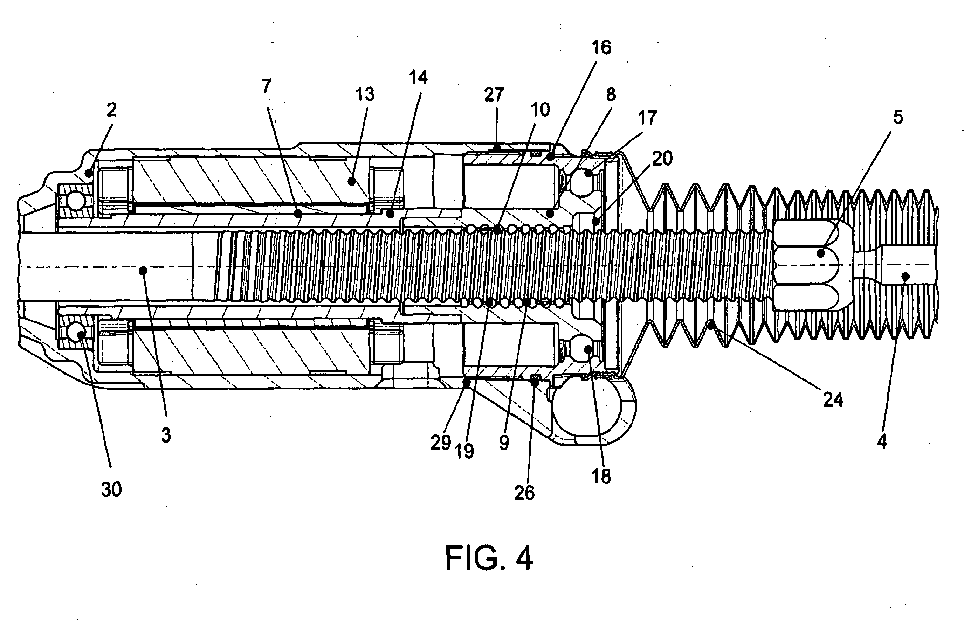

Der Gehäusedeckel 16 weist ferner eine zentrale Öffnung 20 auf, durch die sich die Lenkstange 3 hindurch erstreckt. Um diese Öffnung 20 ist gehäuseaußenseitig eine ringförmige Anschlagfläche 21 vorgesehen, gegen die eine Spurstange 4 bzw. ein Spurstangengelenk 5 axial anlaufen kann, um den maximalen Lenkhub der Lenkstange 3 zu begrenzen. Dieser Anschlag 21 kann, wie insbesondere in dem dritten Ausführungsbeispiel nach Fig. 4 gezeigt, auch entfallen und gegebenenfalls an anderer Stelle vorgesehen werden.

Um die Anschlagfläche 21 verläuft ein kragenförmiger Ringabschnitt 22, der radial außenseitig einen Ringabsatz 23 aufweist. An diesem Ringabsatz 23 ist ein Faltenbalg 24 befestigt und abgedichtet, der die Lenkung gegen das Eindringen von Schmutz und Feuchtigkeit schützt.

Der Gehäusedeckel 16 dichtet darüber hinaus gegenüber dem Lenkgetriebegehäuse 2 ab. Dazu ist im Kontaktbereich mit dem Lenkgetriebegehäuse 2 an dem Gehäusedeckel 16 eine Ringnut 25 ausgebildet, in der ein Dichtungselement 26, beispielsweise ein O-Ring angeordnet ist.

Zur Befestigung an dem Lenkgetriebegehäuse 2 weist der Gehäusedeckel 16 einen Gewindeabschnitt 27 auf, der unmittelbar mit dem Lenkgetriebegehäuse 2 verschraubt ist. Ergänzend ist eine Abdichtung auch über dieses Verbindungsgewinde möglich.

Der Gewindeabschnitt 27 ist vorzugsweise radial um das Wälzlager 15 angeordnet und befindet sich an einem entsprechenden Außenumfangsabschnitt 28, der innenseitig mit der Laufbahn 17 versehen ist. Zwischen dem Gehäusedeckel 16 und dem Lenkgetriebegehäuse 2 ist eine Zentrierung 29 vorgesehen.

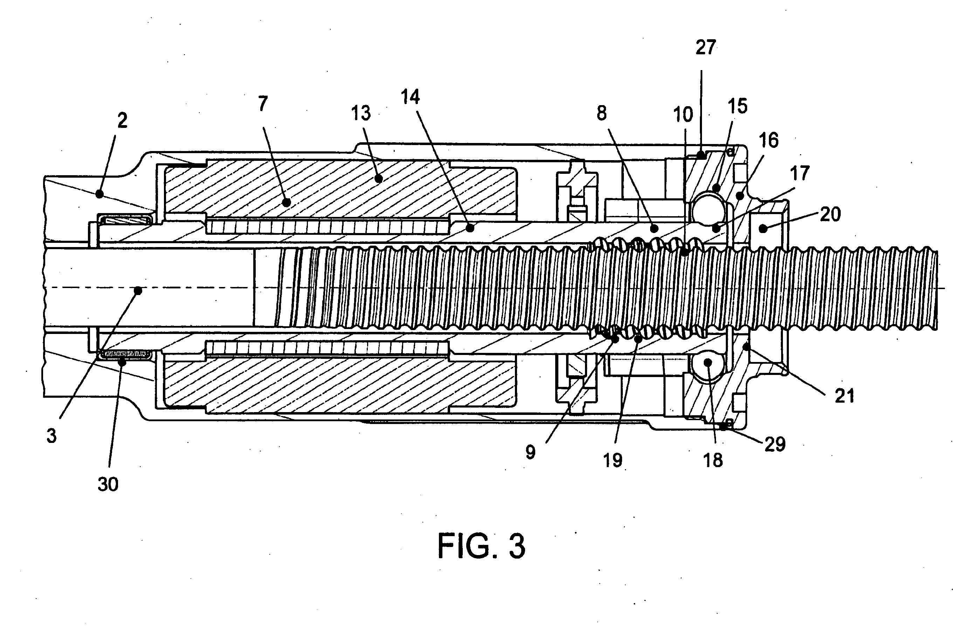

Ein zweites Ausführungsbeispiel ist in Figur 3 dargestellt, das im Wesentlichen dem ersten Ausführungsbeispiel entspricht. Gleichartige Elemente sind dementsprechend mit gleichen Bezugszeichen versehen.

Die Abdichtung des Gehäusedeckels 16 erfolgt hierbei über den Gewindeabschnitt 27.

Zudem sind die Kugelgewindemutter 8 und der Rotor 14 des Elektromotors 7 einstückig als ein Bauteil miteinander ausgebildet. Der Rotor 8 ist über ein weiteres Wälzlager 30, das hier beispielhaft als Nadellager ausgeführt ist, an dem Lenkgetriebegehäuse 2 gelagert.

Figur 4 zeigt ein drittes Ausführungsbeispiel, das im Wesentlichen dem ersten Ausführungsbeispiel entspricht. Gleichartige Elemente sind dementsprechend wiederum mit gleichen Bezugszeichen versehen.

Im Unterschied zu dem ersten Ausführungsbeispiel ist hier am Intergraldeckel 16 kein Anschlag für das Spurstangengelenk 5 vorgesehen. Ein Ring sowie ein Ringabsatz, wie in Fig. 2 dargestellt, können somit entfallen. Die Anbindung des Faltenbalgs 24 erfolgt hier an einem das Wälzlager 15 umgebenden Außenumfangsabschnitt des Gehäusedeckels 16.

Im Unterschied zu dem zweiten Ausführungsbeispiel sind die Kugelgewindemutter 8 und der Rotor 14 des Elektromotors 7 separate Bauteile, die miteinander gefügt sind. Als weitere Lagerung für die aus der Kugelgewindemutter 8 und dem Rotor 14 gebildete Hohlwelle um die Zahnstange 3 dient hier als Wälzlager 30 ein Rillenkugellager, das von der Seite des Öffnung des Gehäusedeckels 16 montiert wird.

Die Erfindung wurde vorstehend anhand von bevorzugten Ausführungsbeispielen näher erläutert. Sie ist jedoch nicht auf die dargestellten Ausführungsbeispiele beschränkt, sondern umfasst alle durch die Patentansprüche definierten Ausgestaltungen.

### Bezugszeichenliste

| | |
|---|---|
| 1 | elektromechanische Fahrzeuglenkung |
| 2 | Lenkgetriebegehäuse |
| 3 | Lenkstange |
| 4 | Spurstange |
| 5 | Spurstangengelenk |
| 6 | Lenksäule |
| 7 | Elektromotor |
| 8 | Kugelgewindemutter |
| 9 | Kugelgewindeabschnitt |
| 10 | Kugelgewindeabschnitt |
| 11 | Kugel |
| 13 | Stator |
| 14 | Rotor |
| 15 | Wälzlager |
| 16 | Gehäusedeckel |
| 17 | Laufbahn |
| 18 | Wälzkörper |
| 19 | Laufbahn |
| 20 | Öffnung |
| 21 | Anschlagfläche |
| 22 | Ring |
| 23 | Ringabsatz |
| 24 | Faltenbalg |
| 25 | Nut |
| 26 | Dichtungselement |
| 27 | Gewindeabschnitt |
| 28 | Außenumfangsabschnitt |
| 29 | Zentrierung |
| 30 | Wälzlager |

## Patentansprüche

1. Elektromechanische Lenkung, umfassend:
- ein Lenkgetriebegehäuse (2),
- eine sich durch dieses erstreckende Lenkstange (3),
- eine Kugelgewindemutter (8), die mit der Lenkstange (3) in Eingriff steht, um ein Antriebsmoment eines Elektromotors in eine Axialkraft an der Lenkstange (3) zu übersetzen,
- einen Gehäusedeckel (16), durch den sich die Lenkstange (3) hindurcherstreckt und der an dem Lenkgetriebegehäuse (2) mittels eines Gewindeabschnitts (27) unmittel bar verschraubt ist,
- wobei die Kugelgewindemutter (8) an dem Gehäusedeckel (16) mittels Wälzkörpern (18) drehbar gelagert ist,
**dadurch gekennzeichnet, dass**
- der Gehäusedeckel (16) eine Laufbahn (17) für die Wälzkörper (18) ausbildet,
- die Axiallänge des Gehäusedeckels (16) kleiner ist als dessen maximaler Außendurchmesser und
- der Gehäusedeckel (16) im Kontaktbereich mit dem Lenkgetriebegehäuse (2) eine Ringnut (25) aufweist, in der ein Dichtungselement (26) angeordnet ist.
- Zwischen dem Gehäubedeckel (16) und dem Lenkgetriebegehäuse (2) eine Zentrierung (29) vorgebehen ist.

2. Elektromechanische Lenkung nach Anspruch 1, **dadurch gekennzeichnet, dass** die Kugelgewindemutter (8) an ihrem Außenumfang eine Laufbahn (19) für die Wälzkörper (18) ausbildet.

3. Elektromechanische Lenkung nach Anspruch 2, **dadurch gekennzeichnet, dass** die zwischen der Laufbahn (17) des Gehäusedeckels (16) und der Laufbahn (19) am Außenumfang der Kugelgewindemutter (8) angeordneten Wälzkörper (18) Kugeln sind, welche vorzugsweise in einem Käfig gehalten sind.

4. Elektromechanische Lenkung nach einem der Ansprüche 1 bis 3, **dadurch gekennzeichnet, dass** der Gehäusedeckel (16) aus Wälzlagerstahl hergestellt ist.

5. Elektromechanische Lenkung nach einem der Ansprüche 1 bis 4, **dadurch gekennzeichnet, dass** der Gehäusedeckel (16) zumindest im Bereich seiner Laufbahn (17) für die Wälzkörper (18) gehärtet ist.

6. Elektromechanische Lenkung nach einem der Ansprüche 1 bis 5, **dadurch gekennzeichnet, dass** das Lenkgetriebegehäuse (2) sich axial über die Kugelgewindemutter (8) erstreckt und der Gehäusedeckel (16) die Kugelgewindemutter (8) lediglich teilweise, jedoch nicht vollständig, axial überlappt.

7. Elektromechanische Lenkung nach einem der Ansprüche 1 bis 6, **dadurch gekennzeichnet, dass** die Kugelgewindemutter (8) an ihrem Innenumfang einen Gewindeabschnitt (9) aufweist und die Laufbahn (19) am Außenumfang axial außerhalb des Gewindeabschnitts (9) angeordnet ist.

8. Elektromechanische Lenkung nach einem der Ansprüche 1 bis 7, **dadurch gekennzeichnet, dass** der Gehäusedeckel (16) einen Gewindeabschnitt (27) ausbildet und über diesen Gewindeabschnitt (27) unmittelbar mit dem Lenkgetriebegehäuse (2) verschraubt ist.

9. Elektromechanische Lenkung nach Anspruch 8, **dadurch gekennzeichnet, dass** das Verbindungsgewinde zwischen dem Gehäusedeckel (16) und dem Lenkgetriebegehäuse (2) durch eine Gewindedichtung abgedichtet ist.

10. Elektromechanische Lenkung nach einem der Ansprüche 1 bis 9, **dadurch gekennzeichnet, dass** der Gehäusedeckel (16) gehäuseaußenseitig eine Anschlagfläche (21) für eine Spurstange aufweist.

11. Elektromechanische Lenkung nach einem der Ansprüche 1 bis 10, **dadurch gekennzeichnet, dass** der Gehäusedeckel (16) gehäuseaußenseitig einen Ringabsatz (23) aufweist, an dem ein Faltenbalg (24) befestigt und abgedichtet ist.

12. Elektromechanische Lenkung nach einem der Ansprüche 1 bis 11, **dadurch gekennzeichnet, dass** der Gehäusedeckel (16) ein Drehteil ist.

13. Elektromechanische Lenkung nach einem der Ansprüche 1 bis 12, **dadurch gekennzeichnet, dass** die Kugelgewindemutter (8) über ein einziges Wälzlager (15) drehgelagert ist.

## Claims

1. Electromechanical steering system, comprising:
- a steering gear housing (2),
- a steering rod (3) which extends through the former,
- a ball nut (8) which is in engagement with the steering rod (3), in order to transform a drive moment of an electric motor into an axial force on the steering rod (3),
- a housing cover (16), through which the steering rod (3) extends and which is screwed directly on the steering gear housing (2) by means of a threaded section (27),
- the ball nut (8) being rotatably mounted on the housing cover (16) by means of rolling bodies (18),
**characterized in that**
- the housing cover (16) forms a raceway (17) for the rolling bodies (18),
- the axial length of the housing cover (16) is smaller than its maximum external diameter,
- the housing cover (16) has an annular groove (25) in the contact region with the steering gear housing (2), in which annular groove (25) a sealing element (26) is arranged, and
- a centring means (29) is provided between the housing cover (16) and the steering gear housing (2).

2. Electromechanical steering system according to Claim 1, **characterized in that** the ball nut (8) forms a raceway (19) for the rolling bodies (18) on its outer circumference.

3. Electromechanical steering system according to Claim 2, **characterized in that** the rolling bodies (18) which are arranged between the raceway (17) of the housing cover (16) and the raceway (19) on the outer circumference of the ball nut (8) are balls which are preferably held in a cage.

4. Electromechanical steering system according to one of Claims 1 to 3, **characterized in that** the housing cover (16) is produced from anti-friction bearing steel.

5. Electromechanical steering system according to one of Claims 1 to 4, **characterized in that** the housing cover (16) is hardened at least in the region of its raceway (17) for the rolling bodies (18).

6. Electromechanical steering system according to one of Claims 1 to 5, **characterized in that** the steering gear housing (2) extends axially over the ball nut (8) and the housing cover (16) axially overlaps the ball nut (8) merely partially, but not completely.

7. Electromechanical steering system according to one of Claims 1 to 6, **characterized in that** the ball nut (8) has a threaded section (9) on its inner circumference and the raceway (19) is arranged on the outer circumference axially outside the threaded section (9).

8. Electromechanical steering system according to one of Claims 1 to 7, **characterized in that** the housing cover (16) forms a threaded section (27) and is screwed directly to the steering gear housing (2) via the said threaded section (27).

9. Electromechanical steering system according to Claim 8, **characterized in that** the connecting thread between the housing cover (16) and the steering gear housing (2) is sealed by a thread seal.

10. Electromechanical steering system according to one of Claims 1 to 9, **characterized in that** the housing cover (16) has, on the outer side of the housing, a stop face (21) for a track rod.

11. Electromechanical steering system according to one of Claims 1 to 10, **characterized in that** the housing cover (16) has, on the outer side of the housing, an annular shoulder (23), on which a folding bellows (24) is fastened and sealed.

12. Electromechanical steering system according to one of Claims 1 to 11, **characterized in that** the housing cover (16) is a turned part.

13. Electromechanical steering system according to one of Claims 1 to 12, **characterized in that** the ball nut (8) is mounted rotatably via a single anti-friction bearing (15).

## Revendications

1. Direction électromécanique, comprenant :
- un boîtier de mécanisme de direction (2),
- une barre de direction (3) s'étendant à travers celui-ci,
- un écrou à billes (8) qui est en prise avec la barre de direction (3) afin de convertir un couple d'entraînement d'un moteur électrique en une force axiale appliquée à la barre de direction (3),
- un couvercle de boîtier (16) à travers lequel s'étend la barre de direction (3) et qui est vissé directement au boîtier de mécanisme de direction (2) au moyen d'une portion filetée (27),
- l'écrou à billes (8) étant monté à rotation sur le couvercle de boîtier (16) au moyen de corps de roulement (18),
**caractérisée en ce que**
- le couvercle de boîtier (16) constitue une piste de roulement (17) pour les corps de roulement (18),
- la longueur axiale du couvercle de boîtier (16) est inférieure à son diamètre extérieur maximal,
- le couvercle de boîtier (16) présente, dans la région de contact avec le boîtier de mécanisme de direction (2), une rainure annulaire (25) dans laquelle est disposé un élément d'étanchéité (26), et
- entre le couvercle de boîtier (16) et le boîtier de mécanisme de direction (2) est prévu un centrage (29).

2. Direction électromécanique selon la revendication 1, **caractérisée en ce que** l'écrou à billes (8) forme sur sa périphérie extérieure une piste de roulement (19) pour les corps de roulement (18).

3. Direction électromécanique selon la revendication 2, **caractérisée en ce que** les corps de roulement (18) disposés entre la piste de roulement (17) du couvercle de boîtier (16) et la piste de roulement (19) sur la périphérie extérieure de l'écrou à billes (8) sont des billes qui sont de préférence maintenues dans une cage.

4. Direction électromécanique selon l'une quelconque des revendications 1 à 3, **caractérisée en ce que** le couvercle de boîtier (16) est fabriqué en acier pour paliers à roulement.

5. Direction électromécanique selon l'une quelconque des revendications 1 à 4, **caractérisée en ce que** le couvercle de boîtier (16) est trempé au moins dans la région de sa piste de roulement (17) pour les corps de roulement (18).

6. Direction électromécanique selon l'une quelconque des revendications 1 à 5, **caractérisée en ce que** le boîtier de mécanisme de direction (2) s'étend axialement sur l'écrou à billes (8) et le couvercle de boîtier (16) chevauche axialement l'écrou à billes (8), seulement partiellement mais pas complètement.

7. Direction électromécanique selon l'une quelconque des revendications 1 à 6, **caractérisée en ce que** l'écrou à billes (8) présente sur sa périphérie intérieure une portion filetée (9) et la piste de roulement (19) est disposée sur la périphérie extérieure axialement à l'extérieur de la portion filetée (9).

8. Direction électromécanique selon l'une quelconque des revendications 1 à 7, **caractérisée en ce que** le couvercle de boîtier (16) constitue une portion filetée (27) et est vissé directement au boîtier de mécanisme de direction (2) par le biais de cette portion filetée (27).

9. Direction électromécanique selon la revendication 8, **caractérisée en ce que** le filetage de connexion entre le couvercle de boîtier. (16) et le boîtier de mécanisme de direction (2) est rendu étanche par un joint d'étanchéité fileté.

10. Direction électromécanique selon l'une quelconque des revendications 1 à 9, **caractérisée en ce que** le couvercle de boîtier (16) présente du côté extérieur du boîtier une surface de butée (21) pour une barre d'accouplement.

11. Direction électromécanique selon l'une quelconque des revendications 1 à 10, **caractérisée en ce que** le couvercle de boîtier (16) présente du côté extérieur du boîtier un épaulement annulaire (23) sur lequel est fixé et étanche un soufflet (24).

12. Direction électromécanique selon l'une quelconque des revendications 1 à 11, **caractérisée en ce que** le couvercle de boîtier (16) est une pièce tournante.

13. Direction électromécanique selon l'une quelconque des revendications 1 à 12, **caractérisée en ce que** l'écrou à billes (8) est supporté à rotation par le biais d'un palier à roulement unique (15).
